# EUROPEAN PATENT APPLICATION

(11) **EP 2 535 806 A1**
(43) Date of publication of application: **19.12.2012**
(21) Application number: 12171647.6
(22) Date of filing: 12.06.2012
(51) Int. Cl.: G06F 9/44, G06F 9/445

(54) **Method and apparatus for merging applications in a portable terminal**

(30) Priority: 13.06.2011 KR 20110056798
(71) Applicant: Samsung Electronics Co., Ltd., Suwon-si, Gyeonggi-do, 443-742 (KR)
(72) Inventor: Chae, Beom-Seok, Gyeonggi-do (KR); Hyeon, Tae-Jin, Gyeonggi-do (KR)
(74) Representative: Hylarides, Paul Jacques

(57) **Abstract**

Merger of applications in a portable terminal includes selecting a basic application and an additional application by a user; obtaining information of the additional application; and performing a function of the additional application using the basic application and using the information of the additional application.

## Description

The present invention relates generally to the merger of applications in a portable terminal. More particularly, the present invention relates to a method and an apparatus for merging applications using an Application Programming Interface (API) or a service used by the application.

In general, functions are added to an application in a portable terminal only by updating the application using additional coding.

That is, to add and merge a new function in the application, the related art needs to update the source of the corresponding application, such as the original source code. For doing so, the updating process requires both time and additional costs, and a user cannot use his/her intended program until the update is available and complete.

To address the above-discussed deficiencies of the prior art, it is a primary aspect of the present invention to provide a method and an apparatus for merging applications in a portable terminal.

Another aspect of the present invention is to provide a method and an apparatus for facilitating function integration of an application and merger or mash-up between services by designing a structure of a platform of a portable terminal for the integration of the application functions, and improving freedom of use and function usability for a user by controlling the integration and the merger or the mash-up in the application.

Yet another aspect of the present invention is to provide a method and an apparatus for saving the cost and the time for updating applications by minimizing additional update and code modifications in a platform of a portable terminal in the light of application integration.

According to one aspect of the present invention, a method for merging applications in a portable terminal includes selecting a basic application and an additional application by a user; obtaining information of the additional application; and performing a first function of the additional application using the basic application and using the information of the additional application.

According to another aspect of the present invention, an apparatus for merging applications in a portable terminal includes a modem for communicating with a node in a network; and a controller for receiving a selection from a user of a basic application and an additional application, obtaining information of the additional application, and performing a first function of the additional application using the basic application and using the information of the additional application.

The above and other aspects, features, and advantages of certain exemplary embodiments of the present invention will become more apparent from the following description taken in conjunction with the accompanying drawings, in which:
FIG. 1 illustrates a protocol stack of a portable terminal for merging applications according to an exemplary embodiment of the present invention;
FIG. 2 illustrates applications according to an exemplary embodiment of the present invention;
FIG. 3 illustrates a method for merging the applications according to one exemplary embodiment of the present invention;
FIG. 4 illustrates a method for merging the applications according to another exemplary embodiment of the present invention;
FIG. 5 illustrates a method for merging the applications according to yet another exemplary embodiment of the present invention; and
FIG. 6 illustrates the portable terminal for merging applications according to an exemplary embodiment of the present invention.

Throughout the drawings, like reference numerals will be understood to refer to like parts, components and structures.

Hereinafter, preferred embodiments of the present invention will be described with reference to the accompanying drawings to assist in a comprehensive understanding of exemplary embodiments of the invention as defined by the claims and their equivalents. It includes various specific details to assist in that understanding but these are to be regarded as merely exemplary. This invention invention may, however, be embodied in many different forms and should not be construed as limited to the exemplary embodiments set forth herein. Accordingly, those of ordinary skill in the art will recognize that various changes and modifications of the embodiments described herein can be made without departing from the scope of the invention. In addition, descriptions of well-known functions and constructions may be omitted for clarity and conciseness.

Also, terms described herein, which are defined considering the functions of the present invention, may be implemented differently depending on user and operator's intention and practice. Therefore, the terms should be understood on the basis of the disclosure throughout the specification. The principles and features of this invention may be employed in varied and numerous embodiments without departing from the scope of the invention. The terms and words used in the following description and claims are not limited to the bibliographical meanings, but, are merely used by the inventor to enable a clear and consistent understanding of the invention. Accordingly, it should be apparent to those skilled in the art that the following description of exemplary embodiments of the present invention is provided for illustration purpose only and not for the purpose of limiting the invention as defined by the appended claims and their equivalents.

Furthermore, although the drawings represent exemplary embodiments of the invention, the drawings are not necessarily to scale and certain features may be exaggerated or omitted in order to more clearly illustrate and explain the present invention.

Among the terms set forth herein, a terminal refers to any kind of device capable of processing data which is transmitted or received to or from any external entity. The terminal may display icons or menus on a screen to which stored data and various executable functions are assigned or mapped. The terminal may include a computer, a notebook, a tablet PC, a mobile device, and the like.

Among the terms set forth herein, a screen refers to a display or other output devices which visually display information to the user, and which optionally are capable of receiving and electronically processing tactile inputs from a user using a stylo, a finger of the user, or other techniques for conveying a user selection from the user to the output devices.

Among the terms set forth herein, an icon refers to a graphical element such as a figure or a symbol displayed on the screen of the device such that a user can easily select a desired function or data. In particular, each icon has a mapping relation with any function being executable in the device or with any data stored in the device and is used for processing functions or selecting data in the device. When a user selects one of the displayed icons, the device identifies a particular function or data associated with the selected icon. Then the device executes the identified function or displays the identified data.

Among terms set forth herein, data refers to any kind of information processed by the device, including text and/or images received from any external entities, messages transmitted or received, and information created when a specific function is executed by the device.

It is to be understood that the singular forms "a," "an," and "the" include plural referents unless the context clearly dictates otherwise. Thus, for example, reference to "a component surface" includes reference to one or more of such surfaces.

By the term "substantially" it is meant that the recited characteristic, parameter, or value need not be achieved exactly, but that deviations or variations, including, for example, tolerances, measurement error, measurement accuracy limitations and other factors known to those of skill in the art may occur in amounts that do not preclude the effect that the characteristic was intended to provide.

Exemplary embodiments of the present invention provide a method and an apparatus for merging applications in a portable terminal.

To integrate application functions, intended applications or application functions are mashed up or merged using an Application Programming Interface (API) provided by a platform of the application program.

A User Interface (UI) for the merged applications can be preset. A user can use a preset UI for the merged applications. For doing so, the present invention utilizes the concept of object oriented modularization, and merges the applications through a separate processor between the application and the platform.

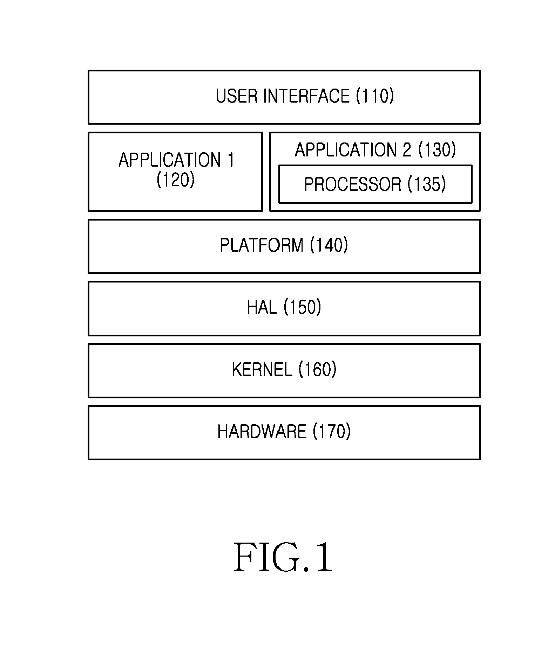

FIG. 1 illustrates a protocol stack of a portable terminal for merging applications according to an exemplary embodiment of the present invention.

Referring to FIG. 1, the protocol stack includes a UI 110, a first application 120, a second application 130, a processor 135, a platform 140, a Hardware Abstraction Layer (HAL) 150, a kernel 160, and hardware 170. The kernel 160 may be hardware dependent or hardware independent.

The second application 130 includes the processor 135 for executing a merger function with the merged applications.

The platform 140 provides the API and a service to run the applications 120 and 130. The service may include subroutines or procedures for accessing other functions not implemented directly by the application, such as local or remote interfaces to other applications, services, and functions such as Internet-based services.

The HAL 150 interconnects the platform 140 and the kernel 160 using the API and the service.

The kernel 160 is the layer for controlling the hardware 170. The hardware 170 can represent a controller, a modem, and/or a storage using a memory, and may be the hardware of the portable terminal.

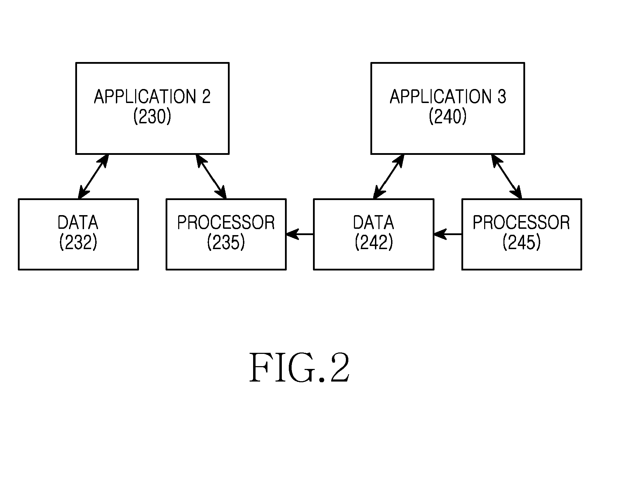

FIG. 2 depicts applications according to an exemplary embodiment of the present invention.

In FIG. 2, a second application 230 and a third application 240 can include or can control processors 235 and 245, respectively, for the merger function associated with the merged applications of the present invention. Each of second application 230 and the third application 240 stores and loads a program to control their operations and to use data 232 and 242, respectively, which are generated in the execution of each application 230, 240. Each of the applications 230, 240 and their functions and associated UIs may be implemented, for example, by object oriented programming, such that the interaction and merger of the applications and their functions is performed by associated object oriented modules being copies or otherwise linked to each other during the merging of the applications.

To merge with the function of the third application 240, the second application 230 can use the data 242 of the third application 240 conveyed through the processor 235. The data 242 can include the API and the service corresponding to the functions of the third application 240.

That is, the second application 230 can use the function of the third application 240 using the API and the service stored in or represented by the data 242.

In exemplary embodiments of the present invention, each application can define the range of allowable mergers which are supported. For example, an alarm application can be merged with a time application and a schedule application, but may be restricted to not be merged with other applications.

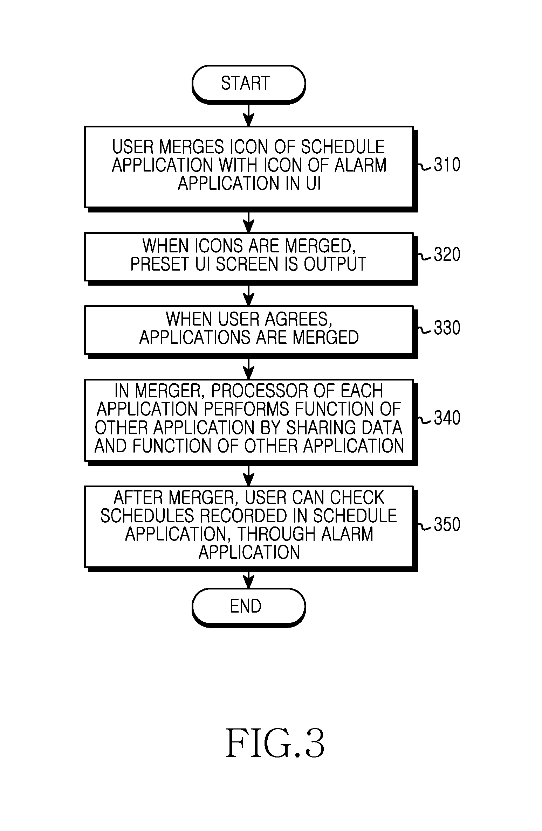

FIG. 3 illustrates a method for merging applications according to one exemplary embodiment of the present invention, in which a schedule application is merged with an alarm application.

In step 310, the user merges an icon of a schedule application with an icon of an alarm application in the UI, such as the UI 110 used in the protocol of FIG. 1. The UI can be provided to the user, for example, on a screen of the portable terminal, to facilitate the merger to be controlled by the user. The UI can provide an icon, a popup window, radio buttons, and the like such that the user can directly control the merger of the applications. In the exemplary embodiment, the icons of each of the schedule application and the alarm application are displayed on the screen of the portable terminal, and the user merges the icons by dragging and dropping the schedule application icon onto the alarm application icon.

When the icons are merged, a preset UI screen, a popup window, or message, is output to the user to inquire about whether the user agrees to the application merger in step 320.

When the user agrees to the merger, the applications are merged in step 330.

In the merger, the processor of each application performs the function of the other application by sharing the data and the function of the other application in step 340. For example, referring to FIG. 2, the processors 235, 245 share the data 232, 242 and the functions of the applications 230, 240 with each other.

After the merger, the user can check schedules recorded in the schedule application through the alarm application in step 350.

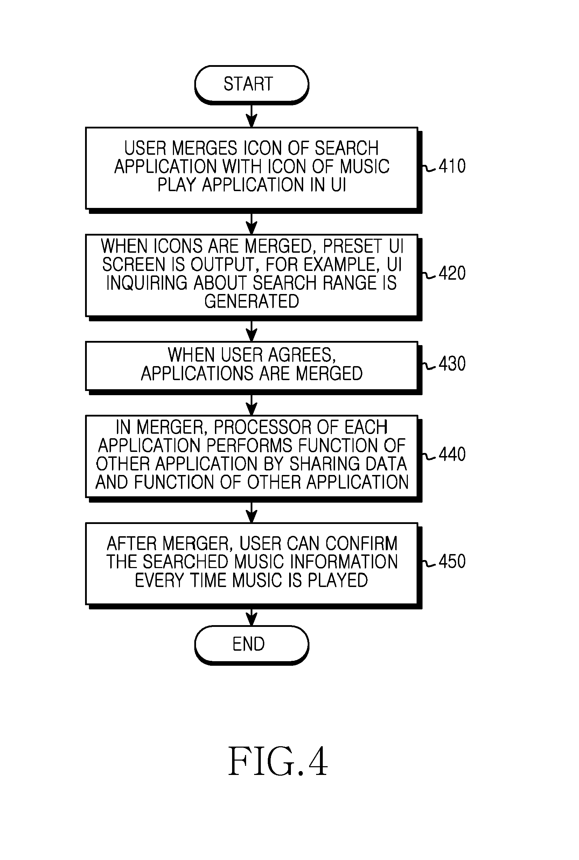

FIG. 4 illustrates a method for merging the applications according to another exemplary embodiment of the present invention, in which a search application is merged with a music play application.

In step 410, the user merges an icon of a search application with an icon of a music play application in the UI, for example, by dragging and dropping the search application icon onto the music play application icon.

When the icons are merged, a preset UI screen, a popup window, or message, inquiring about whether the user agrees to the application merger, is output to the user in step 420.

When the user agrees, the applications are merged in step 430.

In the merger, the processor of each application performs the function of the other application by sharing the data and the function of the other application in step 440.

After the merger, the user can confirm the searched music information every time the music is played in step 450. For example, a UI inquiring about the search range of a search of music information is generated and output by the music play application.

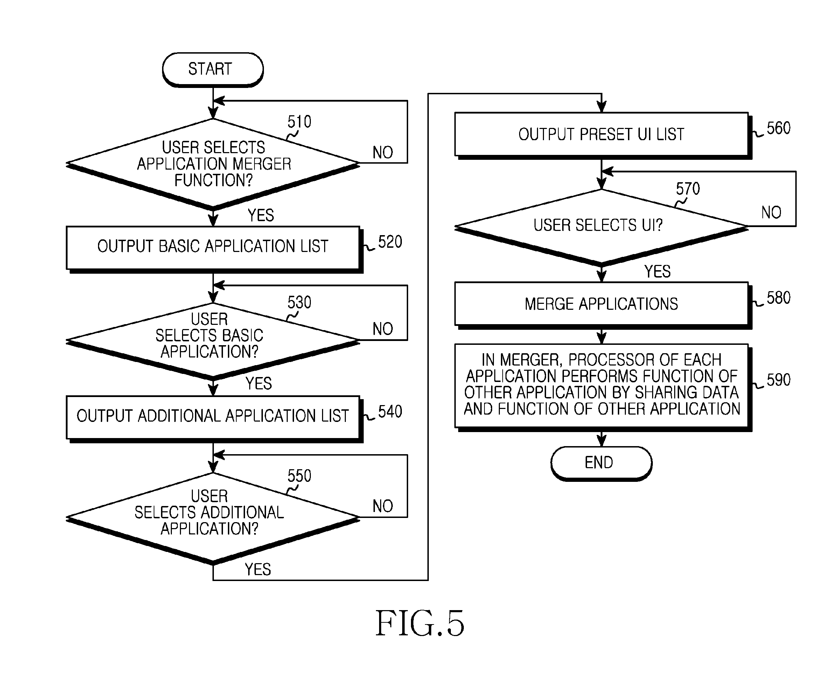

FIG. 5 illustrates a method for merging the applications according to yet another exemplary embodiment of the present invention.

When the user selects an application merger function in step 510, the portable terminal outputs a basic application list in step 520. Otherwise, if no user selection to perform a merger is received, the process loops back and waits for the user to select the application merger function in step 510.

When the user selects the basic application to merge in step 530, the portable terminal outputs an additional application list in step 540. Otherwise, if no user selection of a basic application is received, the process loops back and waits for the user to select a basic application in step 530.

When the user selects the additional application to merge in step 550, the portable terminal outputs a preset UI list in step 560. Otherwise, if no user selection of an additional application is received, the process loops back and waits for the user to select an additional application in step 550.

Herein, the basic application represents the basic application to merge, and the additional application represents the application to be merged with the basic application.

When the user selects the UI to use from the displayed preset UI list in step 570, the portable terminal merges the applications selected by the user in step 580. Otherwise, if no user selection of an UI is received, the process loops back and waits for the user to select an additional application in step 570. That is, each application may have an associated UI, for example, an alarm UI for using an alarm application to set an alarm time, or a music play UI for using a music play application to start, pause, or record music through the music play UI. Once the user selects the UI to use, the merged applications have the selected UI associated with the merged applications for controlling the merged applications.

During the merger, the processor of each application performs the function of the other application by sharing the data and the function of the other application in step 590.

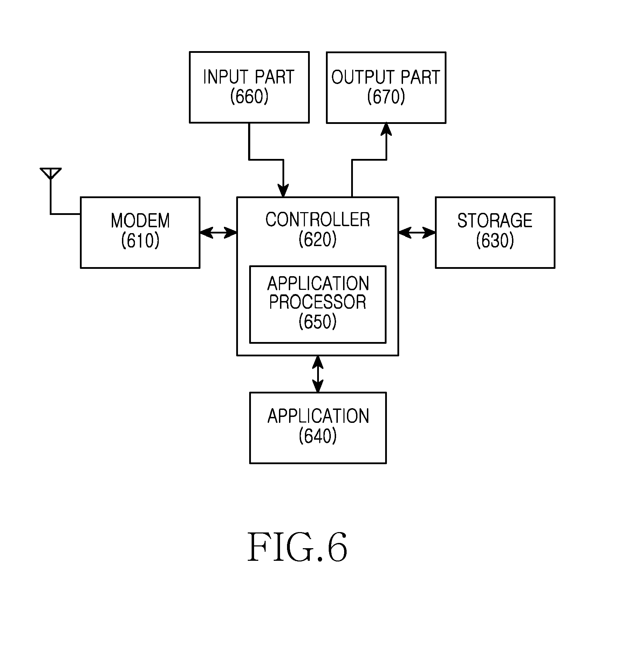

FIG. 6 is a block diagram of a portable terminal for merging applications according to an exemplary embodiment of the present invention.

Referring to FIG. 6, the portable terminal includes a Radio Frequency (RF) modem 610, a controller 620, a storage 630, an application 640, an input part or device 660, and an output part or device 670. The controller 620 can include an application processor 650, or can control an application processor 650 separate from the controller 620. The input part 660 and the output part 670 may be combined in a graphic user interface (GUI), displayed on a screen of the portable terminal and implemented using, for example, a touch screen.

The application processor 650 in FIG. 6 may be either one or both of the processors 235, 245 of FIG. 2. The controller 620 can include or control the application 640, which may be either one or both of the applications 230, 240 of FIG. 2. In addition, either one or both of the data 232, 242 of FIG. 2 may be stored in the storage 630.

The RF modem 610, which is a module for communicating with other devices, includes a wireless processor and a baseband processor. The wireless processor converts a signal received via an antenna to a baseband signal and outputs the baseband signal to the baseband processor. The wireless processor converts a baseband signal output from the baseband processor to a radio signal transmittable in an actual wireless path and transmits the signal over the antenna.

Using the RF modem 610, the portable terminal may receive the additional applications and their associated application information and data from other sources, such as application databases included and/or accessed through the Internet. For example, a company such as "SAMSUNG CORPORATION" may maintain a database of applications, applets, or "apps" which may be operated by portable terminals. During manufacture of the portable terminals, basic applications may be stored in the storage 630, and additional applications and their functionality may be incorporated later in the portable terminal by having the portable terminal access an apps library connected to the Internet and maintained by "SAMSUNG CORPORATION". For example, referring to FIG. 2, the basic applications may be the application 230 stored in the storage 630 of the portable terminal, and the additional applications or apps may be stored in an apps library provided by "SAMSUNG CORPORATION".

The controller 620 controls the operations of the portable terminal. In particular, the controller 620 can control the application 640 and the application processor 650.

The storage 630 stores a program to control the operations of the portable terminal, and also stores temporary data generated by the program execution of the application 640.

The input part 660 provides the user's inputs and selections to the controller 620, and the output part 670 displays the output from the controller 620. The output part 670 can output the UI, and the input part 660 can provide the user's input through the UI to the controller 620. The application 640 may be the same as one or both of the applications 230, 240 of FIG. 2.

When the user selects the application merger function through the input part 660, the controller 620 outputs the basic application list through the output part 670. That is, the basic application list can include a plurality of basic application candidates to be selected by the user.

When the user selects the basic application to merge, using the input part 660, the controller 620 outputs the additional application list through the output part 670. That is, the additional application list can include a plurality of additional application candidates which may be selected by the user. The additional application list and other application information and data may be obtained through the modem 610 from a node in a network, such as an API library and/or an apps library accessible through the Internet. The application information and data may include the name of an associated API and/or services used by the application, as well as the title and author of the application, a date of creation, and operating parameters of the application, such as minimum operating specifications to execute the application, and customizable user settings which may be stored in the application data.

Next, when the user selects the additional application to merge, using the input part 660, the controller 620 outputs the preset UI list through the output part 670. Herein, the basic application represents the basic application to merge, and the additional application represents the application to be merged with the basic application.

When the user selects the UI to use through the input part 660, the controller 620 merges the applications selected by the user. In the merger, the application processor 650 of the application 640, as the selected base application, performs the function of the other application, that is, the selected additional application, by sharing the data and the function of the selected additional application.

After the merger, the application 640 can use the merged function of the selected additional application through the application processor 650. In so doing, the application program 640 implements the merged function from the selected additional application and executes the corresponding function using the API and the service provided by the platform 140 of FIG. 1.

The application processor 650 functions the same as the processor 135 of FIG. 1, and allows the merged application to use the API and the services of the merged application.

The present invention can facilitate the function integration of the applications and the merger or mash-up between the services by providing the structure of the platform of the portable terminal for the integration of the application functions, controlling the integration and the merger in the application, and improving the product satisfaction of users by increasing freedom of use and function usability of the user.

The above-described methods according to the present invention can be implemented in hardware, firmware or as software or computer code that can be stored in a recording medium such as a CD ROM, an RAM, a floppy disk, a hard disk, or a magneto-optical disk or computer code downloaded over a network originally stored on a remote recording medium or a non-transitory machine readable medium and to be stored on a local recording medium, so that the methods described herein can be rendered in such software that is stored on the recording medium using a general purpose computer, or a special processor or in programmable or dedicated hardware, such as an ASIC or FPGA. As would be understood in the art, the computer, the processor, microprocessor controller or the programmable hardware include memory components, e.g., RAM, ROM, Flash, etc. that may store or receive software or computer code that when accessed and executed by the computer, processor or hardware implement the processing methods described herein. In addition, it would be recognized that when a general purpose computer accesses code for implementing the processing shown herein, the execution of the code transforms the general purpose computer into a special purpose computer for executing the processing shown herein.

While the invention has been shown and described with reference to certain exemplary embodiments thereof, it will be understood by those skilled in the art that various changes in form and details may be made therein without departing from the spirit and scope of the invention as defined by the appended claims and their equivalents.

## Claims

1. A method for merging applications in a portable terminal, comprising:
selecting a basic application and an additional application;
obtaining information of the additional application;
and
performing a first function of the additional application using the basic application and using the information of the additional application.

2. The method of claim 1, wherein the selecting of the basic application and the additional application comprises:
displaying a plurality of basic application candidates;
and
selecting one of the basic application candidates to be the basic application.

3. The method of claim 2, further comprising:
displaying a plurality of additional application candidates; and
selecting one of the additional application candidates to be the additional application.

4. The method of any of the preceding claims, wherein the selecting of the basic application and the additional application comprises:
selecting a second function to merge with the first function of the additional application.

5. The method of any of the preceding claims, wherein the information of the additional application is one of an Application Programming Interface (API) or a service used by the additional application.

6. The method of any of the preceding claims, wherein the performing of the first function:
performing the first function of the additional application using a processor of the basic application and using one of an Application Programming Interface (API) or a service used by the additional application.

7. The method of any of the preceding claims, wherein the performing of the first function comprises:
selecting a user interface to use the first function of the additional application.

8. An apparatus for merging applications in a portable terminal, comprising:
a modem for communicating with a node in a network; and
a controller for receiving a selection of a basic application and an additional application, obtaining information of the additional application from the node via the modem, and performing a first function of the additional application using the basic application and using the information of the additional application.

9. The apparatus of claim 8, wherein, to select the basic application, the controller displays a plurality of basic application candidates and receives a selection of one of the basic application candidates to be the basic application.

10. The apparatus of claim 9, wherein, to select the additional application, the controller displays a plurality of additional application candidates, and receives a selection of one of the additional application candidates to be the additional application.

11. The apparatus of claim 8 or 9, wherein, when selecting the basic application and the additional application, the controller receives a selection from a second function to merge with the first function of the additional application.

12. The apparatus of claim 8, 9 or 10, wherein the information of the additional application is one of an Application Programming Interface (API) or a service used by the additional application.

13. The apparatus of any of claims 8-12, wherein, when the basic application performs the first function of the additional application using the information of the additional application, a processor of the basic application performs the first function of the additional application using one of an Application Programming Interface (API) or a service used by the additional application.

14. The apparatus of any of claims 8-13, wherein, when the basic application performs the first function of the additional application using the information of the additional application, the controller receives a selection from a user interface to use the first function of the additional application.

15. The apparatus of any of claims 8-14, wherein the apparatus is configured to perform the method according to any of the claims 1-7.
